# EUROPEAN PATENT APPLICATION

(11) **EP 3 419 087 A1**
(43) Date of publication of application: **26.12.2018**
(21) Application number: 17753094.6
(22) Date of filing: 10.02.2017
(51) Int. Cl.: H01M 4/136, H01M 4/1397, H01M 4/58, H01M 4/62

(54) **LITHIUM ION SECONDARY BATTERY AND METHOD FOR PRODUCING SAME**

(30) Priority: 16.02.2016 JP 2016027100
(71) Applicant: Murata Manufacturing Co., Ltd., Nagaokakyo-shi, Kyoto 617-8555 (JP)
(72) Inventor: KITAO, Hideki, Nagaokakyo-shi Kyoto 617-8555 (JP)
(74) Representative: Reeve, Nicholas Edward
(86) International application number: PCT/JP2017/004991
(87) International publication number: WO 2017/141836

(57) **Abstract**

Provided is a lithium ion secondary battery including a lithium phosphorus oxide having an olivine structure as a positive electrode active material constituting a positive electrode, which has low impedance of the positive electrode and is excellent in input/output characteristics, and a method for producing the lithium ion secondary battery.

The lithium ion secondary battery has a configuration in which the positive electrode active material is predominantly composed of olivine type lithium phosphorus oxide, the positive electrode contains a binder predominantly composed of a resin containing polyamic acid and polyimide, and a ratio A/B of a peak intensity A of an aromatic ring to a peak intensity B of an imide ring of the positive electrode by FTIR is 0.20 or more.

As the olivine type lithium phosphorus oxide, one predominantly composed of lithium iron phosphate is used.

A carbon material is contained in the positive electrode as a conductive agent.

## Description

### TECHNICAL FIELD

The present invention relates to a lithium ion secondary battery, specifically to a lithium ion secondary battery including lithium phosphorus oxide having an olivine structure as a positive electrode active material and a method for producing the same.

### BACKGROUND ART

Lithium phosphorus oxide having an olivine structure (olivine type lithium phosphorus oxide) is known as a positive electrode active material used for a lithium ion secondary battery, which has a small influence on the environment and is highly safe.

In preparing the positive electrode, when this olivine type lithium oxide (for example, lithium iron phosphate (LiFePO₄)) is slurried and applied onto a positive electrode current collector such as an aluminum foil, polyvinylidene fluoride (PVdF) is generally used as a binder.

For example, Patent Document 1 describes that a positive electrode mixture slurry prepared by compounding lithium iron phosphate (LiFePO₄) having an olivine structure as a positive electrode active material, polyvinylidene fluoride (PVdF) as a binder, and a solvent is applied onto a positive electrode current collector and dried to form a positive electrode (Patent Document 1, paragraph 0105).

### PRIOR ART DOCUMENT

### PATENT DOCUMENT

Patent Document 1: Japanese Patent Application Laid-Open No. 2002-117833

### SUMMARY OF THE INVENTION

### Problem to be solved by the invention

However, as in Patent Document 1, a positive electrode including lithium iron phosphate (LiFePO₄) having an olivine structure as a positive electrode active material and polyvinylidene fluoride (PVdF) as a binder has a problem that impedance taken as a whole positive electrode becomes high, and it is not always possible to obtain a lithium ion secondary battery having sufficient input/output characteristics.

The present invention has been made to solve the above problems, and it is an object of the present invention to provide a lithium ion secondary battery including a lithium phosphorus oxide having an olivine structure as a positive electrode active material constituting a positive electrode, which has low impedance of the positive electrode and is excellent in input/output characteristics, and a method for producing the lithium ion secondary battery.

### Means for solving the problem

In order to solve the above-mentioned problems, the lithium ion secondary battery of the present invention is a lithium ion secondary battery including:
a positive electrode having a positive electrode active material predominantly composed of olivine type lithium phosphorus oxide and a positive electrode current collector,
a negative electrode having a negative electrode active material and a negative electrode current collecting foil, and
a separator having lithium-ion permeability disposed between the positive electrode and the negative electrode,
wherein the positive electrode active material constituting the positive electrode is predominantly composed of olivine type lithium phosphorus oxide,
the positive electrode contains a binder predominantly composed of a resin containing polyamic acid and polyimide, and
a ratio A/B of a peak intensity A of an aromatic ring to a peak intensity B of an imide ring of the positive electrode by FTIR is 0.20 or more.

In the present invention, "a ratio of a peak intensity A of an aromatic ring to a peak intensity B of an imide ring: A/B" is a ratio of a peak intensity A to a peak intensity B in the case where the peak intensity A of an aromatic ring of a positive electrode is denoted by A and the peak intensity B of the imide ring of a positive electrode is denoted by B, measured by using FTIR (Fourier Transform Infrared Spectroscopy), that is, a value of A/B.

Further, in the lithium ion secondary battery of the present invention, it is preferred that the olivine type lithium phosphorus oxide is predominantly composed of lithium iron phosphate.

By using one predominantly composed of (including, as a main component,) lithium iron phosphate as an olivine type lithium phosphorus oxide that constitutes the positive electrode active material, it is possible to realize a lithium ion secondary battery having low resistance of the positive electrode and excellent input/output characteristics.

Further, the positive electrode preferably contains a carbon material as a conductive agent.

When the positive electrode contains the carbon material as a conductive agent, the carbon material is present on the surface of the olivine type lithium phosphorus oxide particles constituting the positive electrode active material, and the contact between the positive electrode active material particles and the diffusion of the lithium ions in the carbon material (for example, carbon) are accelerated, and remarkable effects can be achieved concerning lowering the resistance of the positive electrode, improving input/output characteristics, and the like.

The reason why the above effect is achieved is presumably that the polyimide and the polyamic acid constituting the positive electrode active material specifically react with the carbon material (carbon or the like) as the conductive agent contained in the positive electrode, and thereby the contact between the positive electrode active material particles and the diffusion of the lithium ions in the carbon material (for example, carbon) are accelerated, and as a result, a low impedance is realized.

In particular, it has been confirmed that an outstanding effect can be achieved in lithium iron phosphate (LFP) in which a carbon material such as carbon is present on the surface of the positive electrode active material.

Further, the method for producing a lithium ion secondary battery of the present invention is,
a method for producing a lithium ion secondary battery including a positive electrode having a positive electrode active material predominantly composed of olivine type lithium phosphorus oxide and a positive electrode current collector, a negative electrode having a negative electrode active material and a negative electrode current collecting foil, and a separator having lithium-ion permeability disposed between the positive electrode and the negative electrode, the method including the steps of:
(a) mixing a positive electrode active material predominantly composed of an olivine type lithium phosphorus oxide, a binder predominantly containing a polyamic acid, and a solvent to prepare a positive electrode mixture slurry, (b) applying the positive electrode mixture slurry onto the positive electrode current collector, and (c) heat-treating a coated body of the positive electrode mixture slurry applied to the positive electrode current collector to mix polyamic acid and polyimide, whereby a positive electrode is formed in which a ratio A/B of a peak intensity A of an aromatic ring to a peak intensity B of an imide ring at the time when measured by FTIR is 0.20 or more. Advantageous effect of the invention

In the lithium ion secondary battery of the present invention, since the positive electrode active material constituting the positive electrode is predominantly composed of olivine type lithium phosphorus oxide and the positive electrode contains a binder predominantly composed of a resin containing polyamic acid and polyimide, and the ratio A/B of the peak intensity A of the positive aromatic ring to the peak intensity B of the positive imide ring of the positive electrode by FTIR is set to 0.20 or more, it is possible to realize a lithium ion secondary battery having low resistance of the positive electrode, excellent input/output characteristics, and large battery capacity.

Further, since the method for producing a lithium ion secondary battery of the present invention includes the steps of (a) mixing a positive electrode active material predominantly composed of an olivine type lithium phosphorus oxide, a binder predominantly containing a polyamic acid, and a solvent to prepare a positive electrode mixture slurry, (b) applying the positive electrode mixture slurry onto the positive electrode current collector, and (c) heat-treating a coated body of the positive electrode mixture slurry applied to the positive electrode current collector to mix polyamic acid and polyimide, whereby a positive electrode is formed in which a ratio A/B of a peak intensity A of an aromatic ring to a peak intensity B of an imide ring at the time when measured by FTIR is 0.20 or more, it is possible to efficiently produce a lithium ion secondary battery having low resistance of the positive electrode, excellent input/output characteristics, and large battery capacity.

### BRIEF EXPLANATION OF DRAWINGS

FIG. 1 is an exploded perspective view showing a battery element of a lithium ion secondary battery according to an embodiment of the present invention, that is, a battery element including a positive electrode, a negative electrode, and a separator.
FIG. 2 is a perspective view showing an appearance configuration of a lithium ion secondary battery according to an embodiment of the present invention.

### MODE FOR CARRYING OUT THE INVENTION

Embodiments of the present invention will be shown below, and characteristics of the present invention will be described in more detail.

### [Embodiment 1]

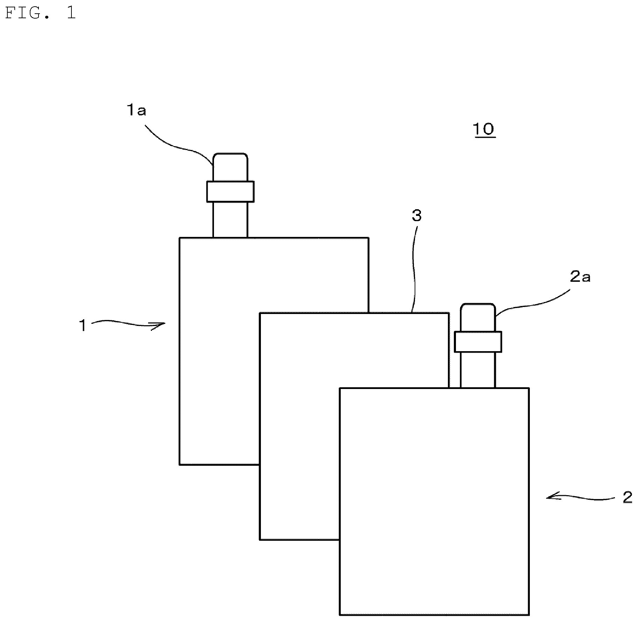

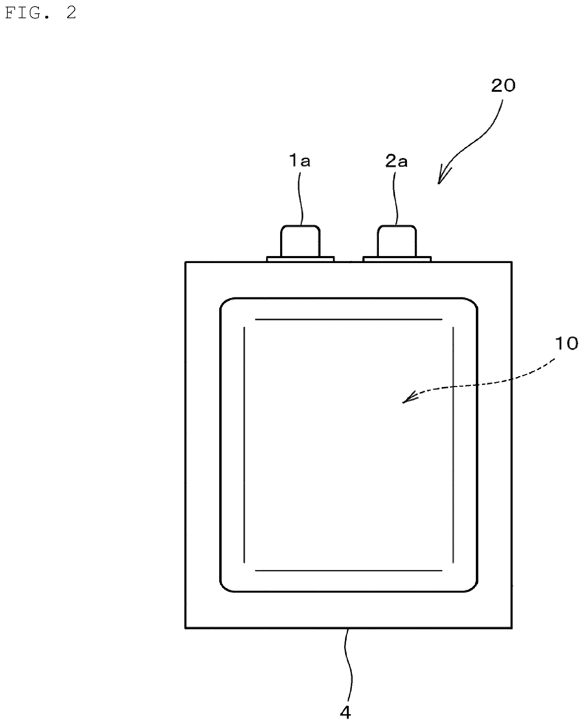

In Embodiment 1, using a positive electrode, a negative electrode, and a nonaqueous electrolytic solution, which are prepared by the method described below, a nonaqueous electrolytic solution secondary battery was prepared which includes a laminated battery element as shown in FIGs. 1 and 2 and has the battery capacity of 20 mAh. Embodiment 1 will be described below.

### <Preparation of Positive Electrode>

(a) LiFePO₄ in which a carbon material was adhered to the surface at a ratio of 1 wt% as the positive electrode active material was prepared.
   Then, the positive electrode active material, a carbon material as a conductive agent, and an N-methyl-2-pyrrolidone (NMP) solution in which polyamic acid (PI) as a binder was dissolved were compounded in such a way that the weight ratio among the positive electrode active material, the conductive agent, and the binder was 80 : 10 : 7 to obtain a compounding material.
   Next, this compounding material was kneaded to prepare a positive electrode mixture slurry.
(b) Then, the positive electrode mixture slurry was applied onto the positive electrode current collector made of an aluminum foil, dried and rolled with a rolling roller. At this time, the weight per unit area of the positive electrode mixture was set to 6.5 mg/cm² and the packing density was set to 2.0 g/cc.
(c) The rolled electrode (positive electrode mixture coated body) was heat treated (dried) at 350°C for 1 hour in an argon gas stream and cooled to room temperature. Thereafter, the cooled electrode was cut into a size of 50 mm × 50 mm, and a positive electrode was prepared by attaching, to the electrode, a positive electrode current collecting tab having a width of 5 mm, a thickness of 100 µm, and a length of 100 mm.

### <FTIR peak intensity ratio of aromatic ring and imide ring of binder contained in positive electrode>

Using the FTIR (Fourier Transform Infrared Spectroscopy), the positive electrode produced as described above was subjected to FT-IR measurement by a single reflection ATR method using a diamond crystal, and the ratio A/B (area intensity ratio) of the peak intensity A of the aromatic ring to the peak intensity B of the imide ring, respectively obtained, was determined.

### <Preparation of Negative Electrode>

As the negative electrode active material, spherical natural graphite particles coated with low crystalline carbon and having an average particle size of 15 µm were used. Then, the negative electrode active material composed of the low crystalline carbon-coated natural graphite and a solution formed by dissolving polyvinylidene fluoride (PVdF) as a binder in the NMP solution were compounded in such a way that the weight ratio between the negative electrode active material and the binder was 95 : 5 to obtain a compounding material.

Then, this compounding material was kneaded to prepare a negative electrode mixture slurry. Then, the negative electrode mixture slurry was applied onto the negative electrode current collector made of a copper foil, and then dried at a temperature of 120°C. At this time, the weight per unit area of the negative electrode mixture was set to 4 mg/cm² and the packing density was set to 1.5 g/cc.

Then, the electrode (negative electrode mixture coated body) was cut into a size of 52 mm × 52 mm, and a negative electrode was prepared by attaching, to the electrode, a negative electrode collector tab made of Ni and having a width of 5 mm, a thickness of 100 µm, and a length of 100 mm.

### <Preparation of Nonaqueous Electrolytic Solution>

As a nonaqueous solvent, a mixed solvent formed by mixing ethylene carbonate (EC) and diethyl carbonate (DEC) which is a chain carbonate at a volume ratio of 1 : 2 was used, and an electrolyte LiPFg was dissolved in the mixed solvent so as to have a concentration of 1 mol/L to prepare a nonaqueous electrolytic solution.

### <Preparation of Lithium Ion Secondary Battery>

FIG. 1 shows the configuration of a battery element prepared by a method described below, and FIG. 2 shows a lithium ion secondary battery formed by encapsulating the battery element together with the nonaqueous electrolyte in a case made of a laminate film.

As shown in FIG. 1, in preparing the lithium ion secondary battery of the present embodiment, first, a lithium ion-permeable microporous film made of polyethylene was interposed, as a separator 3, between the positive electrode 1 provided with the positive electrode current collecting tab 1a and the negative electrode 2 provided with the negative electrode current collecting tab 2a which are prepared as described above, and these positive electrode 1, negative electrode 2, and separator 3 were overlaid to form a battery element 10.

Then, the battery element 10 was sandwiched between rectangular aluminum laminate films, and three sides of the film were heated at a temperature of 80°C and thermally fused to form an external capsule material. Then, 0.3 g of the nonaqueous electrolytic solution prepared as described above was injected from the opening of an external capsule material 4 made of an aluminum laminate film and an opening of the external capsule material 4 was sealed by thermal fusion to prepare a lithium ion secondary battery 20 having a structure as shown in FIG. 2.

### <Measurement of Battery Capacity>

The lithium ion secondary battery prepared as described above was placed in a constant temperature oven set at 25°C and charged at a charge current of 10 mA until a voltage reached 3.8 V, and left standing for 10 minutes. Thereafter, the battery was discharged at a discharge current of 10 mA until a voltage reached 2.5 V. Then, a discharge capacity obtained at this time was taken as a battery capacity.

### <Impedance Measurement>

After the lithium ion secondary battery was discharged at a discharge current of 10 mA until a voltage reached 2.5 V, it was charged at 10 mA for 1 hour, and the charge capacity was adjusted so as to be 50% of the above battery capacity. Then, the charged lithium ion secondary battery was placed in a constant temperature oven adjusted to 25°C, and AC impedance was measured in the range of 1 MHz to 0.05 Hz. Then, the resulting impedance value was taken as the AC impedance resistance value of the lithium ion secondary battery.

### [Embodiment 2]

In Embodiment 1 described above, in the step (c) of <Preparation of Positive Electrode>, the rolled electrode (positive electrode mixture coated body) was subjected to heat treatment under the condition of 350°C for 1 hour in an argon gas stream, but in Embodiment 2, the heat treatment time was changed to 3 hours.

In other respects, a lithium ion secondary battery was prepared in the same manner as in Embodiment 1 described above.

With respect to the positive electrode, the ratio A/B (area intensity ratio) of the peak intensity A of the aromatic ring to the peak intensity B of the imide ring was determined by the same method as in Embodiment 1.

For the prepared lithium ion secondary battery, the battery capacity and the impedance were measured by the same method as in Embodiment 1.

In addition, in each of Embodiments 3 to 9 and Comparative Examples 1 to 4 described below, by the same method as in Embodiment 1 described above, the ratio A/B of the peak intensity A of the aromatic ring to the peak intensity B of the imide ring was determined, and the battery capacity and the impedance were measured.

### [Embodiment 3]

In Embodiment 1 described above, in the step (c) of <Preparation of Positive Electrode>, the rolled electrode (positive electrode mixture coated body) was subjected to heat treatment under the condition of 350°C for 1 hour in an argon gas stream, but in Embodiment 3, the heat treatment time was changed to 5 hours.

In other respects, a lithium ion secondary battery was prepared in the same manner as in Embodiment 1 described above.

For the obtained lithium ion secondary battery, the peak intensity ratio of the aromatic ring to the imide ring was determined, and the battery capacity and the impedance were measured.

### [Embodiment 4]

In Embodiment 1 described above, in the step (a) of <Preparation of Positive Electrode>, the positive electrode active material, the conductive agent, and the binder were compounded so as to have a weight ratio of 80 : 10 : 7, but in Embodiment 4, the positive electrode active material, the conductive agent, and the binder were compounded in the weight ratio of 80 : 10 : 5 to prepare a compounding material.

In other respects, a lithium ion secondary battery was prepared in the same manner as in Embodiment 1 described above.

For the obtained lithium ion secondary battery, the peak intensity ratio of the aromatic ring to the imide ring was determined, and the battery capacity and the impedance were measured.

### [Embodiment 5]

In Embodiment 5, a lithium ion secondary battery was prepared in the same manner as in Embodiment 1 described above except that the positive electrode active material, the conductive agent, and the binder were compounded in the weight ratio of 80 : 10 : 5 and the heat treatment time was changed to 3 hours

For the obtained lithium ion secondary battery, the peak intensity ratio of the aromatic ring to the imide ring was determined, and the battery capacity and the impedance were measured.

### [Embodiment 6]

In Embodiment 6, a lithium ion secondary battery was prepared in the same manner as in Embodiment 1 described above except that the positive electrode active material, the conductive agent, and the binder were compounded in the weight ratio of 80 : 10 : 5 and the heat treatment time was changed to 5 hours.

For the obtained lithium ion secondary battery, the peak intensity ratio of the aromatic ring to the imide ring was determined, and the battery capacity and the impedance were measured.

### [Embodiment 7]

In Embodiment 7, a lithium ion secondary battery was prepared in the same manner as in Embodiment 1 described above except that the positive electrode active material, the conductive agent, and the binder were compounded in the weight ratio of 80 : 10 : 3.

For the obtained lithium ion secondary battery, the peak intensity ratio of the aromatic ring to the imide ring was determined, and the battery capacity and the impedance were measured.

### [Embodiment 8]

In Embodiment 8, a lithium ion secondary battery was prepared in the same manner as in Embodiment 1 described above except that the positive electrode active material, the conductive agent, and the binder were compounded in the weight ratio of 80 : 10 : 3 and the heat treatment time was changed to 3 hours.

For the obtained lithium ion secondary battery, the peak intensity ratio of the aromatic ring to the imide ring was determined, and the battery capacity and the impedance were measured.

### [Embodiment 9]

In Embodiment 9, a lithium ion secondary battery was prepared in the same manner as in Embodiment 1 described above except that the positive electrode active material, the conductive agent, and the binder were compounded in the weight ratio of 80 : 10 : 3 and the heat treatment time was changed to 5 hours.

For the obtained lithium ion secondary battery, the peak intensity ratio of the aromatic ring to the imide ring was determined, and the battery capacity and the impedance were measured.

### [Comparative Example 1]

In each of Embodiments 1 to 9 described above, there is provided a step of subjecting the rolled electrode (positive electrode mixture coated body) to a heat treatment at 350°C in an argon air stream, but in Comparative Example 1, the heat treatment step was omitted. Other than that, a lithium ion secondary battery was prepared in the same manner as in Embodiment 1 described above.

For the obtained lithium ion secondary battery, the peak intensity ratio of the aromatic ring to the imide ring was determined, and the battery capacity and the impedance were measured.

### [Comparative Example 2]

In Comparative Example 2, a lithium ion secondary battery was prepared in the same manner as in Embodiment 1 described above except that the heat treatment step described above was omitted, and the positive electrode active material, the conductive agent, and the binder were compounded in the weight ratio of 80 : 10 : 5.

For the obtained lithium ion secondary battery, the peak intensity ratio of the aromatic ring to the imide ring was determined, and the battery capacity and the impedance were measured.

### [Comparative Example 3]

In Comparative Example 3, a lithium ion secondary battery was prepared in the same manner as in Embodiment 1 described above except that the heat treatment step described above was omitted, and the positive electrode active material, the conductive agent, and the binder were compounded in the weight ratio of 80 : 10 : 3.

For the obtained lithium ion secondary battery, the peak intensity ratio of the aromatic ring to the imide ring was determined, and the battery capacity and the impedance were measured.

### [Comparative Example 4]

In Comparative Example 4, a lithium ion secondary battery was prepared in the same manner as in Embodiment 1 described above except that polyvinylidene fluoride (PVdF) was used as a binder, the heat treatment step described above was omitted, and the positive electrode active material, the conductive agent, and the binder were compounded in the weight ratio of 80 : 10 : 5.

For the obtained lithium ion secondary battery, the peak intensity ratio of the aromatic ring to the imide ring was determined, and the battery capacity and the impedance were measured.

With respect to the lithium ion secondary batteries (samples) of Embodiments 1 to 9 and the lithium ion secondary batteries (samples) of Comparative Examples 1 to 4, the values of the battery capacity and impedance (AC impedance resistance) measured as described above are shown in Table 1. Table 1 also shows the ratio A/B (area intensity ratio) of the peak intensity A of the aromatic ring to the peak intensity B of the imide ring of the positive electrode constituting each lithium ion secondary battery (sample).

**[Table 1]**

| | Positive Electrode Binder Resin | Weight Ratio of Positive Electrode Active Material: Conductive Agent: Binder | Heat Treatment (350°C) Time of Positive Electrode (hr) | Peak Intensity Ratio of Aromatic Ring to Imide Ring | Battery Capacity (mAh) | AC Impedance Resistance Value (Ω) |
|---|---|---|---|---|---|---|
| Embodiment 1 | PI | 80 : 10 : 7 | 1 | 0.24 | 21 | 30 |
| Embodiment 2 | PI | 80 : 10 : 7 | 3 | 0.24 | 21 | 27 |
| Embodiment 3 | PI | 80 : 10 : 7 | 5 | 0.23 | 20 | 21 |
| Embodiment 4 | PI | 80 : 10 : 5 | 1 | 0.22 | 23 | 30 |
| Embodiment 5 | PI | 80 : 10 : 5 | 3 | 0.23 | 22 | 21 |
| Embodiment 6 | PI | 80 : 10 : 5 | 5 | 0.22 | 22 | 23 |
| Embodiment 7 | PI | 80 : 10 : 3 | 1 | 0.24 | 21 | 30 |
| Embodiment 8 | PI | 80 : 10 : 3 | 3 | 0.21 | 21 | 23 |
| Embodiment 9 | PI | 80 : 10 : 3 | 5 | 0.20 | 23 | 21 |
| Comparative Example 1 | PI | 80 : 10 : 7 | 0 | 0.05 | 19 | 51 |
| Comparative Example 2 | PI | 80 : 10 : 5 | 0 | 0.05 | 18 | 51 |
| Comparative Example 3 | PI | 80 : 10 : 3 | 0 | 0.05 | 17 | 50 |
| Comparative Example 4 | PVdF | 80 : 10 : 5 | 0 | not detected | 20 | 49 |

As shown in Table 1, it was confirmed that in the lithium ion secondary batteries of Embodiments 1 to 9, the battery capacity was as large as 20 to 23 mAh and the AC impedance resistance value was as low as 21 to 30 Ω.

It was confirmed that in the lithium ion secondary batteries of Embodiments 1 to 9, the ratio A/B of the peak intensity A of the aromatic ring to the peak intensity B of the imide ring of the positive electrode was 0.20 or more.

On the other hand, it was confirmed that in the lithium ion secondary batteries of Comparative Examples 1 to 4, the battery capacity is as small as 17 to 20 mAh and the AC impedance resistance value is as high as 49 to 51 as compared with the lithium ion secondary batteries of Embodiments 1 to 9.

Further, it was confirmed that in the lithium ion secondary batteries of Comparative Examples 1 to 4, the ratio A/B of the peak intensity A of the aromatic ring to the peak intensity B of the imide ring of the positive electrode was 0.05 or less.

From this result, it is found that as in the lithium ion secondary batteries of Embodiments 1 to 9 which satisfy the requirements of the present invention, when including the following requirements (a) to (c):
(a) the positive electrode active material is predominantly composed of an olivine type lithium phosphorus oxide,
(b) the positive electrode contains a binder predominantly composed of a resin containing polyamic acid and polyimide, and
(c) a ratio A/B of the peak intensity A of the aromatic ring to the peak intensity B of the imide ring of the positive electrode by FTIR is 0.20 or more,
it is possible to obtain a lithium ion secondary battery having excellent input/output characteristics and a large battery capacity, and has AC impedance resistance value much lower than that of a conventional lithium ion secondary battery including PVdF as a binder in a positive electrode (Comparative Example 4).

In each of the above embodiments, the case of using lithium iron phosphate (LiFePO₄) as the olivine type lithium phosphorus oxide has been described, but as the olivine type lithium phosphorus oxide, it is also possible to use olivine type lithium phosphorus oxides represented by LiFe₁₋ₓMₓPO₄ in which M is a metal other than Fe, such as Mn, Ni, Co, and the like.

Further, in the above-described embodiment, the case where a microporous film made of lithium-ion permeable polyethylene is used as a separator has been described as an example, but in addition to this, various publicly known separators used in the lithium ion secondary batteries can be used.

In the above embodiment, a battery element in which a pair of a positive electrode and a negative electrode are laminated with a separator interposed therebetween is housed in an external capsule material made of an aluminum laminate film, and a nonaqueous electrolytic solution is injected and sealed to prepare a lithium ion secondary battery, but it is also possible to have a multilayer structure in which a battery element obtained by laminating a positive electrode and a negative electrode with a separator interposed therebetween is plurally laminated.

In the lithium ion secondary battery of the above embodiment, the positive electrode current collecting tab and the negative electrode current collecting tab have a structure in which both of the current collecting tabs are drawn out from the same side of the external capsule material to the outside, but it is also possible to adopt a structure in which the positive electrode current collecting tab and the negative electrode current collecting tab are drawn out from different sides, for example, mutually opposing sides.

The present invention is not limited to the above embodiments in other respects, and various applications and modifications can be added within the scope of the invention.

### DESCRIPTION OF REFERENCE SYMBOLS

- 1:: Positive electrode
- 1a:: Positive electrode current collecting tab
- 2:: Negative electrode
- 2a:: Negative electrode current collecting tab
- 3:: Separator
- 4:: External capsule material
- 10:: Battery element
- 20:: Lithium ion secondary battery

## Claims

1. A lithium ion secondary battery comprising:
a positive electrode having a positive electrode active material predominantly composed of olivine type lithium phosphorus oxide and a positive electrode current collector,
a negative electrode having a negative electrode active material and a negative electrode current collecting foil, and
a separator having lithium-ion permeability disposed between the positive electrode and the negative electrode,
wherein the positive electrode active material constituting the positive electrode is predominantly composed of olivine type lithium phosphorus oxide,
the positive electrode contains a binder predominantly composed of a resin containing polyamic acid and polyimide, and
a ratio A/B of a peak intensity A of an aromatic ring to a peak intensity B of an imide ring of the positive electrode by FTIR is 0.20 or more.

2. The lithium ion secondary battery according to claim 1, wherein the olivine type lithium phosphorus oxide is predominantly composed of lithium iron phosphate.

3. The lithium ion secondary battery according to claim 1 or 2, wherein the positive electrode contains a carbon material as a conductive agent.

4. A method for producing a lithium ion secondary battery including a positive electrode having a positive electrode active material predominantly composed of olivine type lithium phosphorus oxide and a positive electrode current collector, a negative electrode having a negative electrode active material and a negative electrode current collecting foil, and a separator having lithium-ion permeability disposed between the positive electrode and the negative electrode, the method comprising the steps of:
(a) mixing a positive electrode active material predominantly composed of an olivine type lithium phosphorus oxide, a binder predominantly containing a polyamic acid, and a solvent to prepare a positive electrode mixture slurry, (b) applying the positive electrode mixture slurry onto the positive electrode current collector, and (c) heat-treating a coated body of the positive electrode mixture slurry applied to the positive electrode current collector to mix polyamic acid and polyimide, whereby a positive electrode is formed in which a ratio A/B of a peak intensity A of an aromatic ring to a peak intensity B of an imide ring at the time when measured by FTIR is 0.20 or more.
